# EUROPÄISCHE PATENTSCHRIFT

(11) **EP 1 724 451 B1**
(45) Veröffentlichungstag und Bekanntmachung des Hinweises auf die Patenterteilung: **11.08.2010**
(21) Anmeldenummer: 06009381.2
(22) Anmeldetag: 06.05.2006
(51) Int. Cl.: F02B 27/00

(54) **Luftansaugkanalsystem für eine Verbrennungskraftmaschine**
Intake system for an internal combustion engine
Système d'admission pour un moteur à combustion interne

(30) Priorität: 17.05.2005 DE 102005022589
(43) Veröffentlichungstag der Anmeldung: 22.11.2006
(73) Patentinhaber: Pierburg GmbH, 41460 Neuss (DE)
(72) Erfinder: Steiner, Manfred, 40235 Düsseldorf (DE)
(74) Vertreter: Patentanwälte ter Smitten

(56) Entgegenhaltungen:
- DE-A1- 4 307 313
- US-A- 4 919 086
- FERSEN O VON: "MOTEUR MODULAIRE VOLVO: TROIS CYLINDREES" REVUE AUTOMOBILE, BUECHLER GRAFINO AG, BERNE, CH, Bd. 87, Nr. 22, 28. Mai 1992 (1992-05-28), Seite 17,19, XP000255206 ISSN: 0035-0761
- TSCHACHTLI C: "LA COMPLEXITE DE LA SIMPLICITE LA TECHNIQUE DE LA NOUVELLE BMW SERIE 7" REVUE AUTOMOBILE, BUECHLER GRAFINO AG, BERNE, CH, Nr. 31, 2. August 2001 (2001-08-02), Seite 6, XP001096977 ISSN: 0035-0761

## Beschreibung

Die Erfindung betrifft ein Luftansaugkanalsystem für eine Verbrennungskraftmaschine mit mehreren Einzelansaugrohren, welche jeweils zumindest zwei erste Öffnungen zu einem Sammelvolumen aufweisen, und genau eine dritte Öffnung, welche in fluidischer Verbindung zu einer von einem Einlassventil beherrschten Einlassöffnung eines Zylinders aufweist, so dass ein kürzerer und ein längerer wirksamer Kanal in jedem Einzelansaugrohr entsteht.

Derartige zweiflutige Luftansaugkanalsysteme werden in einer Vielzahl von Anmeldungen beschrieben. Beispielhaft sei hier die DE 4307313 A1 genannt, bei der zwei unterschiedliche Ansaugrohrlängen in einem zweiteiligen Gehäuse realisiert werden können, wobei sich jeweils in der Öffnung des kürzeren wirksamen Einzelansaugkanals eine Schaltklappe befindet, mittels derer diese Öffnung wahlweise zu verschließen oder zu öffnen ist.

Diese Systeme werden dazu genutzt, eine verbesserte Drehmoment- und Leistungsausbeute über den gesamten Drehzahlbereich erreichen zu können. Hohe Drehmomente werden bei niedrigen Drehzahlen mit langen Ansaugrohren und bei hohen Drehzahlen mit kurzen Ansaugrohren erreicht. Dies bedeutet, dass bei niedrigen Drehzahlen jeweils die vorhandene Schaltklappe geschlossen wird. In derartigen Systemen besteht jedoch der Nachteil, dass die vorhandenen Schaltklappen störungsempfindliche Teile sind, welche sowohl einem Verschleiß unterliegen als auch aufgrund der hohen wirksamen Druckkräfte auf die Klappe bei nicht ausreichender Festigkeit zu Bruch neigen.

Aus diesem Grund werden im Sportmotorenbau, also bei Motoren, die in hohen Drehzahlbereichen gefahren werden und hier ihre maximale Leistung entfalten sollen einflutige kurze Einzelansaugrohre verwendet, die jedoch auch in ihrer Leistung beschränkt sind.

Aufgabe der Erfindung ist es daher, ein Luftansaugkanalsystem insbesondere für Sportmotoren zu schaffen, mit dem in hohen Drehzahlbereichen eine Drehmomenten- und Leistungssteigerung gegenüber bekannten Luftansaugkanalsystemen erreicht werden kann.

Diese Aufgabe wird dadurch gelöst, dass beide erste Öffnungen zum Sammelvolumen permanent offen sind und keine beweglichen Einbauten zwischen dem Sammelvolumen und den Einzelansaugrohren angeordnet sind. Dies bedeutet, dass es sich um ein zweiflutiges Luftansaugkanalsystem ohne Schaltklappen handelt. Bei entsprechender Auslegung der beiden wirksamen Kanallängen wird hierdurch eine Steigerung der Leistung und des Drehmomentes durch bessere Füllung im gewünschten Drehzahlbereich erreicht. Beide Öffnungen bilden dabei eine Reflektionsfläche für die vorhandenen Schwingungen im Einzelansaugrohr. Während bei einem einflutigen kurzen Einzelansaugrohr lediglich eine durch Öffnung des Einlassventils entstehende Druckwelle reflektiert wird, wird bei einem Schaltsaugrohr die Reflektion durch die geöffnete Schaltklappe gestört. Bei der erfindungsgemäßen Ausführung können beide reflektierten Druckwellen ohne störende Einbauten genutzt werden.

In einer bevorzugten Ausführungsform sind die wirksamen Kanallängen derart gewählt, dass innerhalb der Öffnungszeit jedes Einlassventils zumindest in einem bevorzugten Drehzahlbereich der Verbrennungskraftmaschine die mit Betätigung des Einlassventils entstehende Druckwelle beide Saugrohrlängen in Richtung zu den ersten beiden Öffnungen und zurück zur Einlassöffnung durchströmt. Durch eine derartige Ausführungsform wird erreicht, dass die Druckwelle, welche durch die Öffnung des Einlassventils entsteht, an den beiden Öffnungen reflektiert wird und mit der durch die Schwingung aus dem Sammelvolumen geförderten Luft auch tatsächlich in den Zylinder zurückströmt. Hierdurch entsteht eine deutlich verbesserte Füllung des Zylinders im entsprechenden Drehzahlbereich und hierdurch eine höhere Motorleistung sowie ein höheres Drehmoment.

In einer weiterführenden Ausführungsform folgt die rückströmende Druckwelle des längeren Kanals der rückströmenden Druckwelle des kürzeren Kanals derart, dass der Mitteldruck zwischen den beiden größten Amplituden der beiden Druckwellen maximal ist. Durch eine derartige Abstimmung der beiden Kanallängen aufeinander wird die Füllung des Zylinders und somit die entstehende Leistung der Verbrennungskraftmaschine zusätzlich erhöht. Eine genaue Abstimmung der Kanallängen aufeinander ist hierfür erforderlich.

In einer weiterführenden Ausführungsform sind die Kanallängen derart aufeinander abgestimmt, dass beide rückströmenden Druckwellen die Einlassöffnung bei im wesentlichen vollständig geöffnetem Einlassventil erreichen, so dass die gesamte Druckwelle optimal nutzbar ist und weitestgehend ohne Strömungsverluste in den Zylinder strömen kann.

Es wird deutlich, dass durch die Ausnutzung dieser zurücklaufenden Druckwellen eine Verbesserung der Zylinderfüllung erreicht wird, und somit ein höherer Aufladeeffekt entsteht, welcher wiederum einen positiven Einfluss auf die Leistung und das Drehmoment in dem entsprechenden Drehzahlbereich hat.

Ein Ausführungsbeispiel ist in den Figuren dargestellt und wird nachfolgend beschrieben.
- Figur 1: zeigt eine Seitenansicht eines erfindungsgemäßen Luftansaugkanalsystems in geschnittener Darstellung durch einen Einzelansaugkanal.
- Figur 2: zeigt den zeitlichen Verlauf des Hubvolumens eines Einlassventils mit eingezeichneter Ankunft der maximalen Amplitude der rücklaufenden Druckwellen.
- Figur 3: zeigt einen Vergleich der Leistungen eines Luftansaugkanalsystems mit inneren Einbauten und ohne innere Einbauten.
- Figur 4: zeigt den zu Figur 3 entsprechenden Drehmomentenvergleich.
- Figur 5: zeigt den zu den Figuren 3 und 4 entsprechenden Luftmassenvergleich im Zylinder.

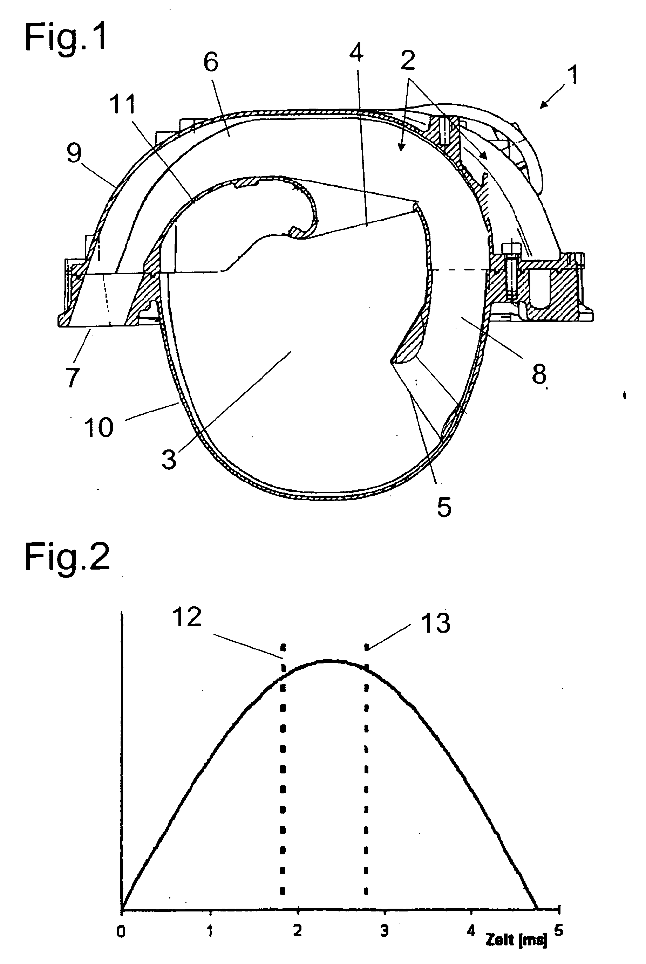

Das in Figur 1 dargestellte Luftansaugkanalsystem 1 besteht aus mehreren hintereinander angeordneten Einlassrohren 2. Durch das Luftansaugkanalsystem 1 erstreckt sich vom ersten Einzelansaugrohr bis zum letzten Einzelansaugrohr 2 ein Sammelvolumen 3, welches über zwei erste in jedem Einzelansaugrohr 2 angeordnete Öffnungen 4 und 5 mit jedem Einzelansaugrohr 2 in fluidischer Verbindung steht. Durch diese Öffnungen 4 und 5 werden zwei verschieden lange wirksame Kanäle gebildet, wobei ein erster kurzer wirksamer Kanal 6 von einer dritten Öffnung 7, welche zum Zylinderkopf einer Verbrennungskraftmaschine führt, bis zur Öffnung 4 reicht, während ein zweiter längerer wirksamer Kanal 8 wiederum von der Öffnung 7 bis zur Öffnung 5 reicht.

Im vorliegenden Ausführungsbeispiel werden diese als Schwingrohre dienenden Kanäle 6, 8 in einem Luftansaugkanalsystem 1 zwischen einer Oberschale 9 und einer Unterschale 10 gebildet, wobei zwischen Oberschale 9 und Unterschale 10 ein Einlegestück 11 angeordnet ist, in dem im wesentlichen die Öffnungen 4 und 5 ausgebildet sind. Die Luft wird üblicherweise über eine nicht dargestellte Drosselklappe dem Sammelvolumen 3 zugeführt, von wo aus die Luft über die Öffnungen 4 oder 5 in jedes einzelne Ansaugrohr 2 strömen kann. Dabei ist jedoch darauf zu achten, dass die Einlassfenster nicht nebeneinander angeordnet sind, da sonst durch eine Übertragung der Luftsäule vom Nachbarzylinder das Schwingsystem erheblich gestört würde.

Wie in Figur 1 deutlich zu erkennen ist, befinden sich an den Öffnungen 4 und 5 keinerlei Einbauten oder Schaltklappen, so dass diese permanent geöffnet sind. Dies hat zur Folge, dass bei Öffnung eines nicht dargestellten Einlassventils im Zylinderkopf der Verbrennungskraftmaschine eine entstehende Druckwelle über die Öffnung 7 in das entsprechende Einzelansaugrohr 2 strömt. Diese Druckwelle setzt sich über den kürzeren Kanal 6 fort und wird an der Öffnung 4 und somit am Sammelvolumen 3 reflektiert. Ein üblicherweise kleinerer Teil dieser Druckwelle gelangt weiter in den längeren Kanal 8 und wird an der Öffnung 5 bzw. dem Sammelvolumen 3 reflektiert. Die nun zurücklaufende Druckwelle von der Öffnung 4 erreicht über den Kanal 6 und die Öffnung 7 wiederum, während das Einlassventil sich noch in geöffneter Stellung befindet, den Zylinder. Die Kanallängen 6,8 der Einzelansaugrohre 2 sind so ausgelegt, dass auch die an der Öffnung 5 reflektierte Druckwelle während der Öffnungszeit des Einlassventils wieder den entsprechenden Zylinder der Verbrennungskraftmaschine erreicht. Dies bedeutet, dass die Druckwelle des längeren Kanals 8 der Druckwelle des kürzeren Kanals 6 folgt. Je nach Auslegung der wirksamen Längen 6,8 der Einzelansaugrohre 2 zueinander wird dadurch die Aufladung im Zylinder deutlich verstärkt zumal durch die rücklaufende Welle zusätzlich Luft aus dem Sammelvolumen 3 in die Einzelansaugrohre 2 gezogen wird.

In Figur 2 ist beispielhaft der Einlassventilhub eines Verbrennungsmotors über der Zeit eingetragen. Es ist zu erkennen, dass während der Öffnung des Einlassventils und hier im Bereich maximalen Hubes sowohl die reflektierte Druckwelle 12 des kurzen Kanals 6 als auch die reflektierte Druckwelle 13 des langen Kanals 8 den Zylinder erreichen. Bei dieser Berechnung wurde der kurze Kanal 6 mit einer wirksamen Länge von 300mm und der lange Kanal 8 mit einer wirksamen Länge von 460mm ausgelegt und die Ventilöffnungszeit bei 200° Kurbelwellenwinkel bei 7.000 U/min mit 4,76ms berechnet. So ergibt sich eine Laufzeit der Druckwelle bis zum Eintritt in den Zylinder von 1,82 ms für den kurzen Kanal 6 und 2,79 ms für den langen Kanal 8, wobei eine Fortsetzung der Druckwelle mit Schallgeschwindigkeit angenommen wird. Die zusätzliche Druckwelle durch den zweiten Kanal führt im Vergleich zu einflutigen Ansaugsystemen zu einer deutlich verbesserten Füllung des Zylinders. Eine derartige Zeitversetzung der Druckwellen von ca. 1 ms hat sich in Versuchen als vorteilhaft herausgestellt.

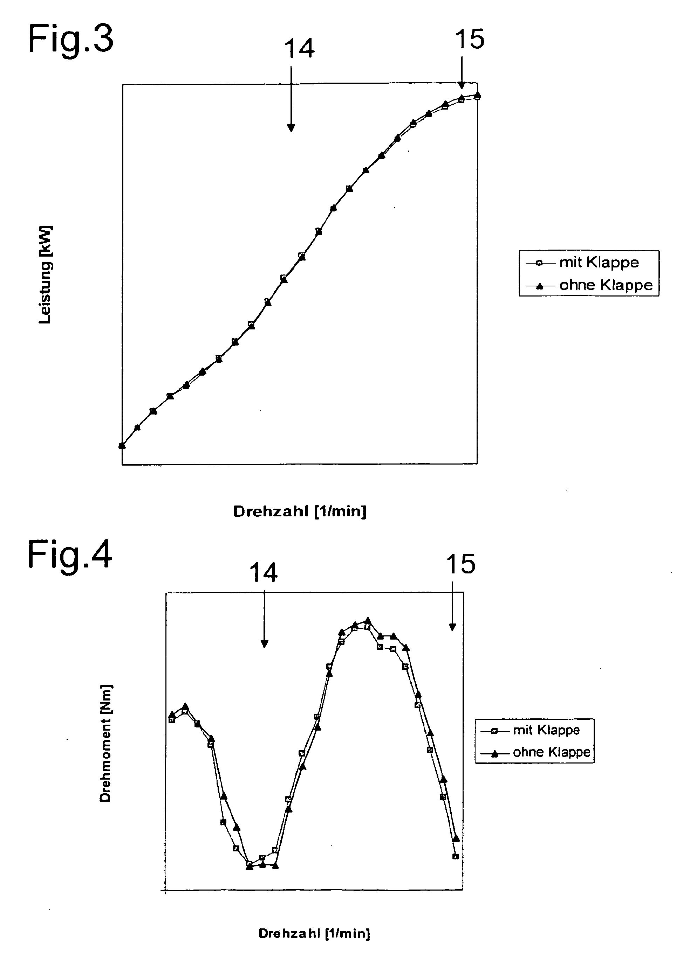

In den Figuren 3 bis 5 sind die Auswirkungen eines derartigen Systems im Vergleich zu einem schaltbaren zweiflutigen Luftansaugkanalsystem dargestellt, wobei die Messungen jeweils bei vollständig geöffneter Schaltklappe beim schaltbaren Luftansaugkanalsystem vorgenommen wurden.

Es wird deutlich, dass sowohl beim Vergleich der Luftmassen als auch beim Vergleich der Leistungen und Drehmomente die beiden Kurven über beinahe den gesamten Drehzahlbereich 14 näherungsweise aufeinander liegen. Dies bedeutet, dass die Aufteilung der beiden angesaugten Luftströme auf den fangen und den kurzen Kanal 6, 8 für die Ausführung mit und ohne Schaltklappe in etwa gleich sind, wobei die Hauptluftmenge durch den kurzen Kanal 6 zum Zylinder angesaugt wird.

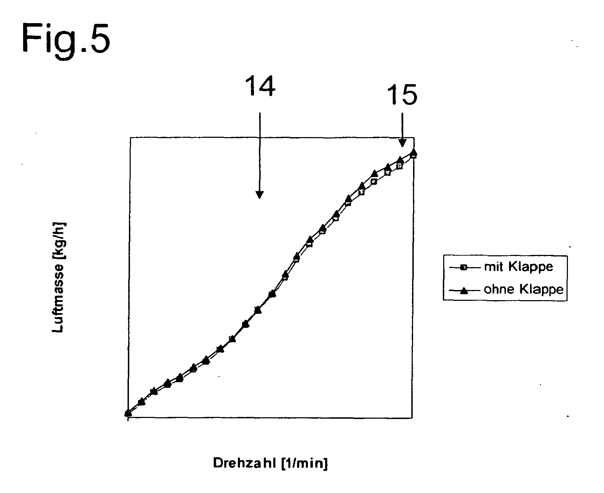

Im oberen Drehzahlbereich 15, d. h. beispielsweise bei Sportmotoren im Bereich ab etwa 7.000 Umdrehungen pro Minute weist das Schaltsaugrohr eine geringere Leistung sowie ein geringeres Drehmoment gegenüber dem Saugrohr mit offenen Kanälen 6, 8 auf, wie in Figur 4 zu erkennen ist. Bei aufeinander abgestimmten Schwingrohrlängen ist eine Leistungserhöhung zu beobachten, da an der Öffnung 4 nun eine glatte nicht gestörte Reflektionsfläche im Vergleich zum Schaltsaugrohr existiert. Bei einem derartigen Saugrohr kann nun der Effekt auftreten, dass die an den Öffnungen 4 und 5 reflektierten Druckwellen innerhalb der Öffnungszeit des Einlassventils frei zum Zylinder zurückströmen können und so eine bessere Füllung erreicht wird. So ist in Figur 5 zu erkennen, dass die in den Zylinder strömende Luftmasse erhöht wird, woraus die gesteigerte Leistung in diesem Drehzahlbereich folgt. Dieser Effekt erfordert eine entsprechende Auslegung der Kanallängen des langen und kurzen Kanals zueinander um in diesem hohen Drehzahlbereich den Leistungseinbruch eines Schaltsaugrohres verhindern zu können.

Es wird deutlich, dass insbesondere bei Sportmotoren, welche in einem hohen Drehzahlbereich gefahren werden und die einen großen Hubraum aufweisen, eine derartige Ausführung entsprechend der Ansprüche deutliche Vorteile gegenüber bekannten Luftansaugkanalsystemen aufweisen. Die erforderlichen aufeinander abzustimmenden Kanallängen lassen sich einfach berechnen und durch weitergehende Versuche optimieren.

## Patentansprüche

1. Luftansaugkanalsystem für eine Verbrennungskraftmaschine mit mehreren Einzelansaugrohren, welche jeweils zumindest zwei erste Öffnungen (4,5) zu einem Sammelvolumen aufweisen, und genau eine dritte Öffnung (7), welche in fluidischer Verbindung zu einer von einem Einlassventil beherrschten Einlassöffnung eines Zylinders aufweisen, so dass ein kürzerer und ein längerer wirksamer Kanal in jedem Einzelansaugrohr entsteht, **dadurch gekennzeichnet, dass** beide erste Öffnungen (4, 5) zum Sammelvolumen (3) permanent offen sind und keine beweglichen Einbauten zwischen dem Sammelvolumen (3) und der dritten Öffnung (7) angeordnet sind.

2. Luftansaugkanalsystem für eine Verbrennungskraftmaschine nach Anspruch 1, **dadurch gekennzeichnet, dass** die wirksamen Kanallängen (6, 8) derart gewählt sind, dass innerhalb der Öffnungszeit jedes Einlassventil zumindest in einem bevorzugten Drehzahlbereich der Verbrennungskraftmaschine (1) die mit Betätigung des Einlassventils entstehende Druckwelle beide Saugrohrlängen (6, 8) in Richtung zu den ersten beiden Öffnungen (4, 5) und zurück zur Einlassöffnung (7) durchströmt.

3. Luftansaugkanalsystem für eine Verbrennungskraftmaschine nach Anspruch 2 **dadurch gekennzeichnet, dass** die wirksamen Kanallängen (6, 8) derart gewählt sind, dass die rückströmende Druckwelle des längeren Kanals (8) der rückströmenden Druckwelle des kürzeren Kanals (6) derart folgt, dass der Mitteldruck zwischen den beiden größten Amplituden der beiden Druckwellen maximal ist.

4. Luftansaugkanalsystem für eine Verbrennungskraftmaschine nach einem der vorhergehenden Ansprüche, **dadurch gekennzeichnet, dass** die wirksamen Kanallängen (6, 8) derart gewählt sind, dass beide rückströmende Druckwellen die Einlassöffnung (7) bei im wesentlichen vollständig geöffnetem Einlassventil erreichen.

## Claims

1. Air intake system for an internal combustion engine comprising a plurality of individual intake pipes, each comprising at least two first openings (4, 5) to a header volume and exactly one third opening (7), which are in fluid communication with an inlet opening of a cylinder controlled by an inlet valve, so that a shorter and a longer effective channel are formed in each individual intake pipe, **characterized in that** both first openings (4, 5) to the header volume (3) are permanently open and no mobile built-in components are arranged between the header volume (3) and the third opening (7).

2. Air intake system for an internal combustion engine according to claim 1, **characterized in that** the effective channel lengths (6, 8) are chosen such that during the opening time of each inlet valve, at least in a preferred range of rotational speed of the internal combustion engine (1), the pressure wave generated by the actuation of the inlet valve flows through both intake pipe lengths (6, 8) towards the first two openings (4, 5) and back to the inlet opening (7).

3. Air intake system for an internal combustion engine according to claim 2, **characterized in that** the effective channel lengths (6, 8) are chosen such that the returning pressure wave of the longer channel (8) follows the returning pressure wave of the shorter channel (6) such that the average pressure between the two highest amplitudes of both pressure waves is maximum.

4. Air intake system for an internal combustion engine acc0rding to one of the preceding claims, **characterized in that** the effective channel lengths (6, 8) are chosen such that both returning pressure waves reach the inlet opening (7) when the inlet valve is substantially fully open.

## Revendications

1. Système d'admission pour un moteur à combustion interne, comprenant plusieurs tubes d'admission individuels présentant au moins deux premières ouvertures (4, 5) dans un volume collecteur et exactement une troisième ouverture (7), qui sont en communication fluidique avec une ouverture d'entrée d'un cylindre contrôlée par une soupape d'entrée, de sorte qu'un passage effectif court et un passage effectif long sont formés dans chaque tube d'admission individuel, **caractérisé en ce que** les deux premières ouvertures (4, 5) dans le volume collecteur (3) sont ouvertes de manière permanente et qu'aucun élément installé mobile n'est disposé entre ledit volume collecteur (3) et la troisième ouverture (7).

2. Système d'admission pour un moteur à combustion interne selon la revendication 1, **caractérisé en ce que** les longueurs effectives des passages (6, 8) sont choisies de façon que pendant la phase ouverte de chaque soupape d'entrée, au moins dans une plage de vitesse de rotation préférée du moteur à combustion interne (1), l'onde de pression générée lors de l'opération de la soupape d'entrée s'écoule à travers les deux longueurs de tube d'admission (6, 8) vers les deux premières ouvertures (4, 5) et reflue vers l'ouverture d'entrée (7).

3. Système d'admission pour un moteur à combustion interne selon la revendication 2, **caractérisé en ce que** les longueurs effectives des passages (6, 8) sont choisies de façon que l'onde de pression refluant dans le passage plus long (8) suit à l'onde de pression refluant du passage plus court (6) de manière que la pression moyenne entre les amplitudes plus hautes des deux ondes de pression est maximale.

4. Système d'admission pour un moteur à combustion interne selon l'une quelconque des revendications précédentes, **caractérisé en ce que** les longueurs effectives des passages (6, 8) sont choisies de façon que les deux ondes de pression refluants arrivent à l'ouverture d'entrée (7) lors de l'ouverture sensiblement complète de la soupape d'entrée.
